# EUROPÄISCHE PATENTSCHRIFT

(11) **EP 4 329 916 B1**
(45) Veröffentlichungstag und Bekanntmachung des Hinweises auf die Patenterteilung: **26.03.2025**
(21) Anmeldenummer: 22723412.7
(22) Anmeldetag: 19.04.2022
(51) Int. Cl.: B01D 47/06, B01D 45/16

(54) **VORRICHTUNG UND VERFAHREN ZUM ABSCHEIDEN VON FLÜSSIGKEITSTROPFEN AUS EINEM GASSTROM MITTELS EINES ZENTRIFUGALTROPFENABSCHEIDERS**
APPARATUS AND METHOD FOR SEPARATING LIQUID DROPLETS FROM A GAS STREAM BY MEANS OF A CENTRIFUGAL DRUM SEPARATOR
DISPOSITIF ET PROCÉDÉ DE SÉPARATION DES GOUTTES DE LIQUIDE D'UN ÉCOULEMENT DE GAZ AU MOYEN D'UN SÉPARATEUR DE GOUTTES CENTRIFUGE

(30) Priorität: 26.04.2021 EP 21170447
(43) Veröffentlichungstag der Anmeldung: 06.03.2024
(73) Patentinhaber: BASF SE, 67056 Ludwigshafen am Rhein (DE)
(72) Erfinder: ZHOU, Yunfei, 67056 Ludwigshafen (DE); LANG, Ortmund, 67056 Ludwigshafen (DE); MEIER, Matthias Wilhelm, 67056 Ludwigshafen (DE); DE RUITER, Cornelis Hendricus, 67056 Ludwigshafen (DE); KRAMP, Marvin, 67056 Ludwigshafen (DE); GRACKIEWICZ, Gregor, 67056 Ludwigshafen (DE); MACHT, Josef, 67056 Ludwigshafen (DE); GITTER, Markus, 67056 Ludwigshafen (DE); HECHLER, Claus, 67063 Ludwigshafen (DE)
(74) Vertreter: BASF IP Association
(86) Internationale Anmeldenummer: PCT/EP2022/060253
(87) Internationale Veröffentlichungsnummer: WO 2022/228938

(56) Entgegenhaltungen:
- EP-B1- 2 512 683
- CN-A- 106 178 765
- CN-A- 107 754 506
- US-A1- 2016 243 487

## Beschreibung

Die Erfindung betrifft einen Zentrifugaltropfenabscheider zum Abscheiden von Flüssigkeitstropfen aus einem Gasstrom, der einen im Querschnitt kreisrunden Mantel mit einer vertikalen Längsachse, eine den Mantel nach oben begrenzende obere Haube mit einem Gasaustrittsstutzen für den im Zentrifugaltropfenabscheider gereinigten Gasstrom, ein unterhalb des Gasaustrittsstutzens angeordnetes Abtropfblech, eine den Mantel nach unten begrenzende untere Haube mit einem Flüssigkeitsaustrittsstutzen zur Abführung der abgeschiedenen Flüssigkeitstropfen und einen tangential in den Mantel mündenden Einlass zum Zuführen des Gasstroms umfasst.

Darüber hinaus betrifft die Erfindung auch ein Verfahren zum Abscheiden von Flüssigkeitstropfen aus einem Gasstrom in solch einem Zentrifugaltropfenabscheider.

Bei Verfahren zur Herstellung von Acrylaten, welche durch eine säurekatalytische Veresterung von (Meth)Acrylsäure mit C4- bis C10-Alkoholen entstehen, werden üblicherweise schwersiedende Prozessstabilisatoren, z.B. Phenothiazin (PTZ), oder auch Flüssigkeitslösungen bzw. Flüssigkeitsgemische, die Prozessstabilisatoren enthalten, eingesetzt. Diese Prozessstabilisatoren müssen bei dem im Verfahren entstandenen Acrylat-Dampf zur Qualitätssicherung des Produktes getrennt werden. Mit diesen Acrylat-Verfahren können entsprechend zum eingesetzten Alkohol u.a. auch n-Butylacrylat (nBA), 2-Ethylhexylacrylat (2-EHA), Isobutylacryat, 2-Propylheptylacrylat oder Octylacrylat erzeugt werden.

In solchen Verfahren wird üblicherweise ein Tropfenabscheider, wie z.B. Lamellenabscheider oder Demister, die auch als Abscheider mit einem Drahtgestrick bekannt sind, eingesetzt. Jedoch leiden diese Tropfenabscheider unter Verschmutzung oder Polymerbildung bedingt durch in dem Gasstrom enthaltene Flüssigkeitstropfen.

So verstopfen die auftretenden Flüssigkeitstropfen die Poren der Lamellen oder des Drahtgestricks im Laufe der Zeit. In diesem Fall muss die Anlage abgestellt werden, um eine Reinigung bzw. einen Austausch zu ermöglichen. Probleme dieser Art werden beispielsweise in dem Dokument DE 19604253 A1 (BASF AG), welches ein 2-Ethylhexylacrylat (2-EHA) Herstellverfahren unter Verwendung eines Demisters offenbart, dargestellt. Als ein weiteres Beispiel offenbart das Dokument DE 10063510 A1 (BASF AG) ein Verfahren zur Herstellung von n-Butylacrylat (nBA), welches ebenfalls unter Verwendung eines Demisters die Flüssigkeitstropfen abscheidet.

Hierbei werden die in den Flüssigkeitstropfen enthaltenen Komponenten durch das konkrete Verfahren vorgegeben. So sind beispielsweise in den Flüssigkeitstropfen Schwersiederanteile, welche z.B. aus dem Reaktor stammen, oder das eigentliche Wertprodukt, wie z.B. das nBA oder das 2-EHA, enthalten.

Als Alternative zu einem separaten Tropfenabscheider ist auch ein Kletterfilmverdampfer (Ralf Goedecke, "Grundlagen, Methodik, Technik, Praxis", Fluidverfahrenstechnik, WILEY-VCH Verlag, Weinheim, 2006) bekannt, in dem ein Tropfenabscheider im oberen Bereich des Kletterfilmverdampfers integriert ist.

Ein Zentrifugaltropfenabscheider kommt ohne poröse Struktur, wie z.B. ein Demister, aus. Deshalb ist ein Zentrifugaltropfenabscheider weniger anfällig für Verstopfungen durch Polymere und Verunreinigungen im Vergleich zum vorstehend beschriebenen Drahtgestrick. Daher kann man eine längere Anlagelaufzeit, eine Einsparung bei den Wartungskosten und eine Erhöhung der Produktionsraten erwarten.

Auch allgemeine Abscheider, welche Zentrifugalkräfte zur Abscheidung von festen oder flüssigen Partikeln ausnutzen, sind im Stand der Technik offenbart. In dem Dokument EP 2 076 335 B1 (Vortex Ecological Technologies Ltd) wird beschrieben, wie Verunreinigungen aus Rauchgasen entfernt werden können. Ein weiterer Abscheider wird z.B. in dem Dokument DE 2137128 A1 (Siemens AG) offenbart, in dem feste oder flüssige Teilchen aus einem Rohgas entfernt werden.

Diese Art von Abscheider scheiden allerdings entweder keine Flüssigkeitstropfen ab oder dienen nur dem Zweck der Aufbereitung eines Rohgases. Zudem werden diese Abscheider nicht für chemische Verfahren verwendet, welche Polymere als Zielprodukt erzeugen.

Im Allgemeinen liefert ein Zentrifugaltropfenabscheider eine vergleichbare Abscheideleistung wie ein Drahtgestrick. Kleine Tröpfchen werden im Abscheider aus dem Dampf zum Großteil abgeschieden.

Der Nachteil bei Zentrifugaltropfenabscheidern ist, dass durch dessen Einsatz in einem chemischen Verfahren häufig eine Polymerbildung an den Wänden des Zentrifugaltropfenabscheiders stattfinden kann. Dadurch wird oftmals eine Reinigung erforderlich. Üblicherweise wird eine Sprüheinrichtung hierzu verwendet. Dabei werden die Wände mit einer Flüssigkeit benetzt, um so die Funktionsweise des Zentrifugaltropfenabscheiders über einen gewissen Zeitraum garantieren zu können.

In der Offenbarung EP 2512683 B1 (BASF SE) wird von einer Einspritzung einer Spülflüssigkeit in einen Zentrifugaltropfenabscheider gelehrt, bei dem die Einspritzung tangential und in Umfangsrichtung zur Wand eines Gasaustrittsstutzens beschrieben wird.

Der Nachteil an diesem Verfahren ist, dass eine Polymerbildung an den Wänden des Zentrifugaltropfenabscheiders oder an den Wänden von inneren Einbauten durch die Spülung in vielen Anwendungen oder bei gewissen Betriebsbedingungen nicht verhindert werden kann. Die durch die Polymerbildung resultierenden Ablagerungen stören die Funktionsweise des Zentrifugaltropfenabscheiders.

Dadurch müssen solche Zentrifugaltropfenabscheider in den entsprechenden Verfahren auch regelmäßig gewartet und gereinigt werden.

Es stellte sich die Aufgabe einen Zentrifugaltropfenabscheider für chemische Verfahren bereitzustellen, an dessen Wandoberflächen und an den Wandoberflächen seiner inneren Einbauten keine Polymerbildung von Flüssigkeitströpfchen während des Betriebs stattfindet oder sich die Polymerbildung zumindest signifikant während des Betriebs reduziert, sodass weniger Wartungsintervalle anfallen. Hierbei sollten auch während des Betriebs die kleinen Flüssigkeitströpfchen effizient aus dem Gasstrom abgeschieden werden.

Eine weitere Aufgabe war es, solch einen Zentrifugaltropfenabscheider bereitzustellen, der in chemischen Verfahren zur Herstellung von insbesondere n-Butylacrylat (nBA) oder 2-Ethylhexylacrylat (2-EHA) eingesetzt werden kann und dafür besonders gut geeignet ist.

Diese Aufgaben wurden erfindungsgemäß durch einen Zentrifugaltropfenabscheider gemäß Anspruch 1 sowie durch ein Verfahren zum Abscheiden von Flüssigkeitstropfen aus einem Gasstrom gemäß Anspruch 10 gelöst. Vorteilhafte Ausgestaltungen des erfindungsgemäßen Zentrifugaltropfenabscheiders sind in den Ansprüchen 2 bis 9 angegeben. Vorteilhafte Ausgestaltungen des erfindungsgemäßen Verfahrens werden in den Ansprüchen 11 bis 14 dargelegt.

Der erfindungsgemäße Zentrifugaltropfenabscheider zum Abscheiden von Flüssigkeitstropfen aus einem Gasstrom umfasst einen im Querschnitt kreisrunden Mantel mit einer vertikalen Längsachse, eine den Mantel nach oben begrenzende obere Haube mit einem Gasaustrittsstutzen für den im Zentrifugaltropfenabscheider gereinigten Gasstrom, ein unterhalb des Gasaustrittsstutzens angeordnetes Abtropfblech, eine den Mantel nach unten begrenzende untere Haube mit einem Flüssigkeitsaustrittsstutzen zur Abführung der abgeschiedenen Flüssigkeitstropfen und einen tangential in den Mantel mündenden Einlass zum Zuführen des Gasstroms. Erfindungsgemäß sind mindestens zwei Düsen zur Zuführung einer Stabilisator-Flüssigkeit in den Innenraum des Zentrifugaltropfenabscheiders vorhanden, befindet sich der Düsenauslass der jeweiligen Düse oberhalb des tangentialen Einlass und unterhalb des Abtropfblechs im Zentrifugaltropfenabscheider, und ist die Hauptsprührichtung für jede einzelne Düse in einem Innenwinkel im Bereich von 0 bis 60° zur vertikalen Längsachse nach oben gerichtet, wodurch alle Wände im Innenraum des Zentrifugaltropfenabscheiders vollständig benetzbar sind.

Bedingt durch die Schwerkraftrichtung fließt Stabilisator-Flüssigkeit, die in Richtung der oberen Haube gesprüht wurde, nach unten und benetzt somit auch die anderen Oberflächenbereiche des Zentrifugaltropfenabscheiders. Ebenso werden entsprechend auch die Oberflächen von Einbauten benetzt, die sich im Sprühstrahl der Düsen befinden. Somit kann durch die erfindungsgemäße Anordnung einer Polymerbildung an den Oberflächen des Zentrifugaltropfenabscheiders und seiner Einbauten effektiv vorgebeugt werden.

Durch die erfindungsgemäße Anordnung der Düsen unterhalb des Abtropfblechs gelingt es, alle Wandoberflächen von Mantel und inneren Einbauten des Zentrifugaltropfenabscheiders ausreichend mit Stabilisator-Flüssigkeit zu benetzen. Auch bei sogenannten Totzonen, welche dem Fachmann auch als Rückstromgebiete bekannt sind, können die Wandoberflächen, wie zum Beispiel in den Randbereichen des oberen Zentrifugaltropfenabscheider-Bereiches, benetzt werden. Auch innere Einbauten im Zentrifugaltropfenabscheider werden vollständig und ausreichend an der Außenseite benetzt, wie beispielsweise das Abtropfblech.

Der Gasstrom wird überraschenderweise durch die Einspritzung in entgegengesetzter Schwerkraftrichtung nicht signifikant gestört, so dass mit diesem erfindungsgemäßen Verfahren die Trennleistung des Zentrifugaltropfenabscheiders nicht signifikant reduziert wird.

In einer bevorzugten Ausgestaltung des Zentrifugaltropfenabscheiders befindet sich das Längenverhältnis zwischen dem axialen Abstand des Düsenauslass der obersten Düse zum Abtropfblech und der Höhe des Zentrifugaltropfenabscheiders im Bereich von 0,03 bis 0,15. Somit wird bei einer üblichen Höhe des Zentrifugaltropfenabscheiders im Bereich von 1 bis 10 m ein geeigneter Abstand zum Abtropfblech gewährleistet, wodurch das Abtropfblech unter Verwendung von gebräuchlichen Düsen ausreichend genug mit Stabilisatorflüssigkeit benetzt werden kann.

In einer weiteren bevorzugten Ausgestaltung des Zentrifugaltropfenabscheiders beträgt das Längenverhältnis zwischen dem radialen Abstand des Düsenauslass zur Mantelinnenfläche und der Höhe des Zentrifugaltropfenabscheiders nicht mehr als 0,06. Somit wird eine wandnahe Einspritzung der Stabilisatorflüssigkeit gewährleistet, wodurch der Aufprall der Stabilisatorflüssigkeit auf die Manteloberfläche ausreichend genug flach verläuft und somit nur eine geringfügige Menge an Stabilisatorflüssigkeit von der Manteloberfläche wieder abspritzt.

In einer bevorzugten Ausgestaltung des Zentrifugaltropfenabscheiders befindet sich der Innenwinkel der jeweiligen Düse im Bereich von 0 bis 50°, besonders bevorzugt im Bereich von 0 bis 40° und ganz besonders bevorzugt im Bereich von 0 bis 30°.

In einer weiteren bevorzugten Ausgestaltung des Zentrifugaltropfenabscheiders sind die jeweiligen Hauptsprührichtungen der Düsen vom Mantel weggeneigt.

In einer weiteren bevorzugten Ausgestaltung des Zentrifugaltropfenabscheiders ist ein offener Apexkegel zur Stabilisierung des Gasstromes auf Wirbelbrechern beim Flüssigkeitsaustrittsstutzen montiert.

In einer weiteren bevorzugten Ausgestaltung des Zentrifugaltropfenabscheiders befindet sich der Gasaustrittsstutzen im Zentrifugaltropfenabscheider zumindest teilweise oberhalb des Mantels auf der Seite der Außenfläche des Mantels. Hierdurch kann an dem Gasaustrittsstutzen keine oder eine weiter verminderte Polymerbildung stattfinden, da in diesem Fall weniger Totzonen bereitgestellt wird.

In einer bevorzugten Ausgestaltung weist die untere Hälfte des Zentrifugaltropfenabscheiders auf der Mantelaußenseite eine Temperiereinrichtung auf. Die Temperiereinrichtung ist bevorzugt eine Heizung. Durch die Erwärmung des Mantels kann die Polymerbildung in geeigneten chemischen Verfahren weiter reduziert werden.

In einer bevorzugten Ausgestaltung des Zentrifugaltropfenabscheiders sind die Düsen durch mindestens ein Steckelement im Zentrifugaltropfenabscheider fixiert, wobei das jeweilige Steckelement eine Lanze und mindestens ein Halteelement für mindestens eine Düse aufweist. Durch das Steckelement können die Düsen in den Abscheider eingeführt als auch wieder bei Bedarf entfernt werden.

In einer weiteren Ausgestaltung des Zentrifugaltropfenabscheiders verläuft jeweils mindestens eine Düse durch ein Öffnungselement im Mantel, vorzugsweise durch einen Stutzen, wobei das Öffnungselement durch ein öffenbares Halteelement, vorzugsweise einen Flansch, abgedichtet ist. Stutzen und Flansche sind einfach und unter geringen Kosten zu erwerben.

In einer weiteren Ausgestaltung des Zentrifugaltropfenabscheiders ist mindestens ein Dichtelement, vorzugsweise ein Gummi-Ring, vorgesehen, welches die Öffnungselemente abdichtet. Somit wird eine Leckage des Gasstroms durch ein elastisches Element sicher verhindert.

In einer weiteren Ausgestaltung des Zentrifugaltropfenabscheiders werden die untere und obere Hauben durch die Montage von jeweils einem Flansch am oberen und unteren Ende des Zentrifugaltropfenabscheiders realisiert. Dadurch werden standardmäßige und leicht verfügbare Bauteile verwendet.

Das erfindungsgemäße Verfahren zum Abscheiden von Flüssigkeitstropfen aus einem Gasstrom wird in einem Zentrifugaltropfenabscheider durchgeführt, der einen im Querschnitt kreisrunden Mantel mit einer vertikalen Längsachse, eine den Mantel nach oben begrenzende obere Haube mit einem Gasaustrittsstutzen für den im Zentrifugaltropfenabscheider gereinigten Gasstrom, ein unterhalb des Gasaustrittsstutzens angeordnetes Abtropfblech, eine den Mantel nach unten begrenzende untere Haube mit einem Flüssigkeitsaustrittsstutzen zur Abführung der abgeschiedenen Flüssigkeitstropfen, und einen tangential in den Mantel mündenden Einlass umfasst, durch den der Gasstrom zugeführt wird. Erfindungsgemäß wird eine Stabilisator-Flüssigkeit durch mindestens zwei Düsen in den Innenraum des Zentrifugaltropfenabscheiders zugeführt, befindet sich der Düsenauslass der jeweiligen Düse oberhalb des tangentialen Einlass und unterhalb des Abtropfblechs im Zentrifugaltropfenabscheider, und ist die Hauptsprührichtung der jeweiligen Düse mit einem Innenwinkel im Bereich von 0 bis 60° zur vertikalen Längsachse nach oben gerichtet, wodurch alle Wände im Innenraum des Zentrifugaltropfenabscheiders vollständig mit der Stabilisator-Flüssigkeit benetzt werden.

Ein Stabilisator ist im Allgemeinen ein Stoff, welcher die Polymerisation von chemischen Verbindungen allgemein vermindert. Insbesondere vermindert ein geeigneter Stabilisator die Polymerisation von chemischen Verbindungen innerhalb des 2-EHA Verfahrens oder des nBA Verfahrens.

In einer bevorzugten Ausführungsform des Verfahrens wird die Stabilisator-Flüssigkeit kontinuierlich dem Zentrifugaltropfenabscheider zugeführt. Somit wird näherungsweise eine gleichbleibende Benetzung der Wände gesichert.

In einer bevorzugten Ausgestaltung des erfindungsgemäßen Verfahrens enthält die Stabilisator-Flüssigkeit 4-Methoxyphenol (MeHQ). Hierbei wird ganz besonders effizient die Polymerbildung an den Wänden verhindert, ohne hierbei das Zielprodukt nachfolgend in seiner Qualität negativ zu beeinflussen. Dies trifft vor allem bei acrylathaltigen Substanzen zu.

Weitere bevorzugte Stabilisatoren, welche in der Stabilisator-Flüssigkeit enthalten sein können, sind beispielsweise 2,4-Dimethyl-6-tert-butylphenol (Topanol A), Hydrochinon und/oder Butylhydroxytoluol (2,6-Di-tert-butyl-p-kresol). Prinzipiell können beliebig viele Stabilisatoren in Form einer Mischung in der Stabilisator-Flüssigkeit enthalten sein.

Die Stabilisator-Flüssigkeit umfasst vorzugsweise neben dem oder den Stabilisator(en) auch das Zielprodukt, welches aus dem Verfahren gewonnen wird. In dieser Schrift ist das Zielprodukt der aus dem Zentrifugaltropfenabscheider austretende Gasstrom. Bei solchen Stabilisator-Flüssigkeiten werden keine Verunreinigungen dem Verfahren beigefügt. Hierbei kann das Zielprodukt auch als Lösungsmittel und/oder Verdünnungsmittel für den oder die Stabilisator(en) zweckmäßig dienen.

In einer bevorzugten Ausgestaltung des Verfahrens wird die Stabilisator-Flüssigkeit den Düsen bereitgestellt, indem ein Teilstrom des Zielproduktes abgezweigt, in einem Ansatzbehälter gesammelt, dort mit dem oder den Stabilisator(en) vermischt und anschließend den Düsen zugeführt wird.

In einer weiteren bevorzugten Ausgestaltung des Verfahrens enthält der zugeführte Gasstrom Tropfen von Substanzen, die aufgrund ihrer chemischen Eigenschaften zur Polymerisation an Wänden des Zentrifugaltropfenabscheiders neigen. Die vollständigen und ausreichenden Benetzungen des Mantels des Zentrifugaltropfenabscheiders sowie der inneren Einbauten im Zentrifugaltropfenabscheider verhindern eine Polymerbildung an den Wänden und verlängern somit die Wartungsintervalle des Zentrifugaltropfenabscheiders.

In einer ganz besonders bevorzugten Ausgestaltung enthält der dem Zentrifugaltropfenabscheider zugeführte Gasstrom Acrylate, die durch eine säurekatalytische Veresterung von (Meth)Acrylsäure mit C4- bis C10-Alkoholen entstanden sind, insbesondere n-Butylacrylat durch Veresterung von Acrylsäure mit n-Butanol oder 2-Ethylhexylacrylat durch Veresterung von Acrylsäure mit 2-Ethylhexanol.In diesen Verfahren sind üblicherweise prozessbedingt auch geringe Mengen von unerwünschten Komponenten enthalten, beispielsweise Phenothiazin (PTZ). Diese unerwünschten Komponenten sind hauptsächlich in den im Gasstrom vorhandenen Flüssigkeitströpfchen enthalten und sollen im Zentrifugaltropfenabscheider abgeschieden werden, damit das Zielprodukt seine Qualität beibehält. Darüber hinaus enthalten die Flüssigkeitstropfen weitere Komponenten, welche sich vorzugsweise u.a. aus dem Zielprodukt ergeben.

In einer bevorzugten Ausgestaltung des Verfahrens ist der Zentrifugaltropfenabscheider derart ausgelegt, dass das Längenverhältnis zwischen dem axialen Abstand des Düsenauslass der obersten Düse zum Abtropfblech und der Höhe des Zentrifugaltropfenabscheiders sich im Bereich von 0,03 bis 0,15 befindet.

In einer bevorzugten Ausgestaltung des Verfahrens ist der Zentrifugaltropfenabscheider derart ausgelegt, dass das Längenverhältnis zwischen dem radialen Abstand des Düsenauslass zur Mantelinnenfläche und der Höhe des Zentrifugaltropfenabscheiders nicht mehr als 0,06 beträgt.

In einer bevorzugten Ausgestaltung des Verfahrens ist der Zentrifugaltropfenabscheider derart ausgelegt, dass sich der Innenwinkel der jeweiligen Düse im Bereich von 0 bis 50°, bevorzugt im Bereich von 0 bis 40° und besonders bevorzugt im Bereich von 0 bis 30° befindet.

In einer bevorzugten Ausgestaltung des Verfahrens ist der Zentrifugaltropfenabscheider derart ausgelegt, dass ein offener Apexkegel zur Stabilisierung des Gasstromes auf Wirbelbrechern beim Flüssigkeitsaustrittsstutzen montiert ist.

In einer bevorzugten Ausgestaltung des Verfahrens ist der Zentrifugaltropfenabscheider derart ausgelegt, dass sich der Gasaustrittsstutzen im Zentrifugaltropfenabscheider zumindest teilweise oberhalb des Mantels auf der Seite der Außenfläche des Mantels befindet.

In einer bevorzugten Ausgestaltung des Verfahrens ist der Zentrifugaltropfenabscheider derart ausgelegt, dass die untere Hälfte des Zentrifugaltropfenabscheiders auf der Mantelaußenseite eine Temperiereinrichtung, insbesondere eine Heizung, aufweist.

In einer bevorzugten Ausgestaltung des Verfahrens ist der Zentrifugaltropfenabscheider derart ausgelegt, dass die Düsen durch mindestens ein Steckelement im Zentrifugaltropfenabscheider fixiert sind, wobei das jeweilige Steckelement eine Lanze und mindestens ein Halteelement für mindestens eine Düse aufweist.

In einer bevorzugten Ausgestaltung des Verfahrens ist der Zentrifugaltropfenabscheider derart ausgelegt, dass jeweils mindestens eine Düse durch ein Öffnungselement im Mantel, vorzugsweise durch einen Stutzen, verläuft, wobei das Öffnungselement durch ein öffenbares Halteelement, vorzugsweise ein Flansch, abgedichtet ist.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten.

Es zeigen:
Fig. 1: Beispiel einer Ausführungsform eines erfindungsgemäßen Zentrifugaltropfenabscheiders im Längs- und im Querschnitt.
Fig. 2: Hauptsprührichtung der Düse, welche normal zum Düsenauslass steht.
Fig. 3: Schnittebene bestimmt für eine Düse.
Fig. 4: Innenwinkel zwischen der Hauptsprührichtung der Düse und dem entgegengesetzten Schwerkraftvektor. In diesem Fall ist die Düse von der Manteloberfläche weg geneigt.
Fig. 5: Innenwinkel zwischen der Hauptsprührichtung der Düse und dem entgegengesetzten Schwerkraftvektor. In diesem Fall ist die Düse zur Manteloberfläche geneigt.
Fig. 6: Steckelement für die jeweilige Düse.
Fig. 7: Tropfenabscheider mit Demister aus dem Stand der Technik.

### Liste der verwendeten Bezugszeichen:

- 1: Mantel
- 2: Obere Haube
- 3: Einlass
- 4: Flüssigkeitsaustrittsstutzen
- 5: Offener Apexkegel
- 6: Wirbelbrecher
- 7: Gasaustrittsstutzen
- 8: Abtropfblech
- 9: Düse(n)
- 10: Untere Haube
- 11: Vertikale Längsachse
- 12: Hauptsprührichtung bzw. Normalenvektor der Querschnittsfläche
- 13 14: Schwerkraftrichtung, Schwerkraftvektor Vertikale Schnittebene
- 15: Düsenauslass bzw. Querschnittsfläche der Düse, durch die die Flüssigkeit aus der jeweiligen Düse herausströmt
- 16: Innenwinkel
- 17: Steckelement
- 18: Lanze
- 19: Halteelement
- 20: Öffnungselemente
- 23: Demister
- 25: Entgegengesetzte Schwerkraftrichtung, Entgegengesetzter Schwerkraftvektor
- 26: Höhe des Zentrifugaltropfenabscheiders
- 27: Durchmesser des Zentrifugaltropfenabscheiders
- 28: Sprüheinrichtung

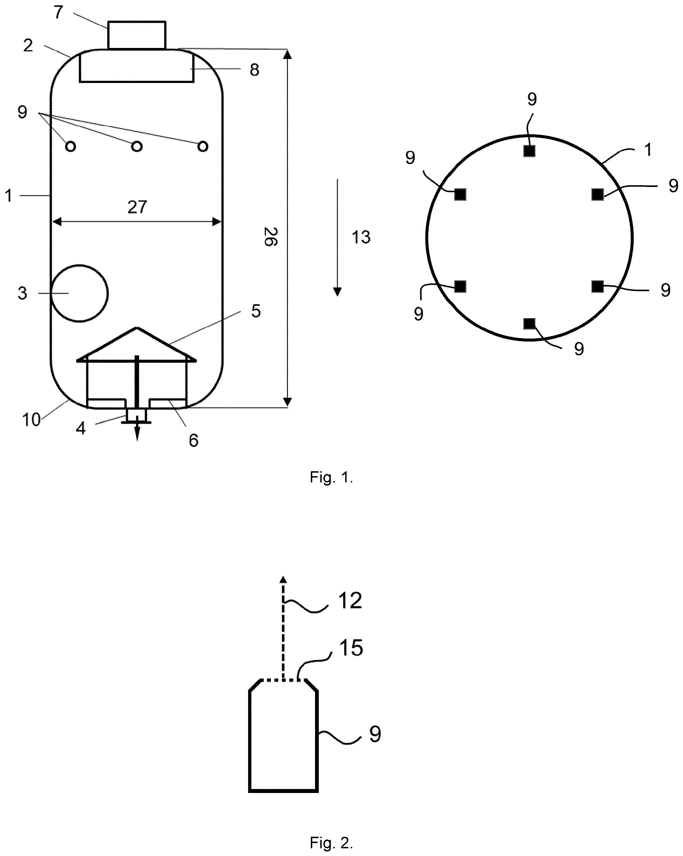

Fig. 1 stellt schematisch ein Beispiel einer Ausführungsform eines erfindungsgemäßen Zentrifugaltropfenabscheiders dar. Auf der linken Seite ist ein Längsschnitt des Zentrifugaltropfenabscheiders entlang seiner vertikalen Längsachse veranschaulicht. Auf der rechten Seite ist ein Querschnitt senkrecht zur Schwerkraftrichtung 13 dargestellt, aus dem die Anordnung der Düsen 9 relativ zum Mantel 1 hervorgeht.

Der Zentrifugaltropfenabscheider ist durch seinen äußeren, im Querschnitt kreisrunden Mantel 1, seine nach oben begrenzende obere Haube 2 mit einem Gasaustrittsstutzen 7 für den im Zentrifugaltropfenabscheider gereinigten Gasstrom, sein unterhalb des Gasaustrittsstutzens angeordnetes Abtropfblech 8 zum Auffangen von kleineren Flüssigkeitstropfen, seine den Mantel 1 nach unten begrenzende untere Haube 10 mit einem Flüssigkeitsaustrittsstutzen 4 zur Abführung der abgeschiedenen Flüssigkeitstropfen und durch seine Abmaße wie die Höhe 26 und den Durchmesser 27 definiert.

Ein mit Flüssigkeitstropfen beladener Gasstrom wird dem Zentrifugaltropfenabscheider durch einen tangentialen Einlass 3 zugeführt. Dadurch wird ein Wirbel entlang des Mantels 1 induziert. Bedingt durch die Schwerkraft 13 bewegen sich die Flüssigkeitstropfen nach unten in Richtung eines Flüssigkeitsaustrittsstutzens 4. Zum effizienteren Abscheiden der Tropfen ist ein offener Apexkegel 5 mit Wirbelbrecher 6 installiert. Der aufgereinigte Gasstrom strömt durch einen Gasaustrittsstutzen 7 aus dem Abscheider heraus.

Das Einsprühen der Stabilisator-Flüssigkeit in den Innenraum des Zentrifugaltropfenabscheiders erfolgt in der dargestellten Ausführungsform über sechs Düsen 9.

Der Düsenauslass der jeweiligen Düse 9 befindet sich oberhalb des tangentialen Einlass 3 und unterhalb des Abtropfblechs 8 im Zentrifugaltropfenabscheider.

Die Hauptsprührichtung für jede einzelne Düse 9 ist in einem Innenwinkel 16 im Bereich von 0 bis 60° zur vertikalen Längsachse nach oben gerichtet, wodurch alle Wände im Innenraum des Zentrifugaltropfenabscheiders vollständig benetzbar sind.

Fig. 2 zeigt eine Hauptsprührichtung 12 einer Düse 9, welche durch einen Normalenvektor auf einer Querschnittsfläche, den Düsenauslass 15, definiert ist. Durch den Düsenauslass 15 der Düse 9 wird die Flüssigkeit gesprüht.

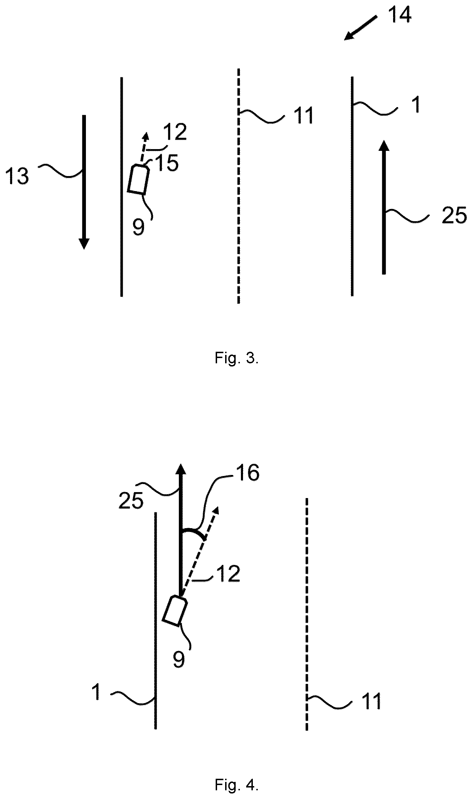

Fig. 3 skizziert eine Schnittebene 14 für jede einzelne Düse 9, welche eine vertikale Längsachse 11 des Mantels 1 und einen geometrischen Mittelpunkt der Querschnittsfläche (Düsenauslass 15 gemäß Fig.2) der Düse 9 enthält. Hierbei wird auch der Schwerkraftvektor 13, der entgegengesetzte Schwerkraftvektor 25 sowie die Hauptsprührichtung 12, bzw. den Normalenvektor, der Düse 9 dargestellt.

Fig. 4 zeigt, dass sich in der Schnittebene 14 entlang der vertikalen Längsachse 11 ein Innenwinkel 16 definieren lässt, der sich zwischen dem entgegengesetzten Schwerkraftvektor 25 und dem Vektor der Hauptsprührichtung 12, bzw. den Normalenvektor, der jeweiligen Düse 9 befindet. Hierbei werden die beiden Vektoren auf die Schnittebene 14 projiziert. In diesem Fall ist die Hauptsprührichtung 12 von der Manteloberfläche 1 weg geneigt.

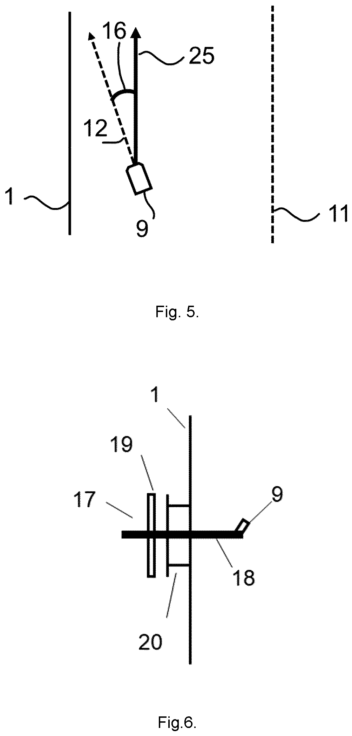

Fig.5 stellt einen Fall in der Schnittebene 14 entlang der vertikalen Längsachse 11 dar, bei dem die Hauptsprührichtung 12, bzw. den Normalenvektor, zur Manteloberfläche 1 hin geneigt ist. Ein Innenwinkel 16 ist zwischen dem entgegengesetzten Schwerkraftvektor 25 und dem Vektor der Hauptsprührichtung 12 der jeweiligen Düse 9 definiert. Hierbei werden die beiden Vektoren auf die Schnittebene 14 projiziert.

Fig. 6 zeigt schematisch ein Steckelement 17 für eine Düse 9. Hierbei ist eine Düse 9 an einer Lanze 18 fixiert. Die Lanze 18 verläuft durch ein Öffnungselement 20 im Mantel 1, wobei das Öffnungselement 20 durch ein öffenbares Halteelement 19 abgedichtet ist. In diesem Beispiel ist das Öffnungselement ein Stutzen und das öffenbare Halteelement 19 ein Flansch.

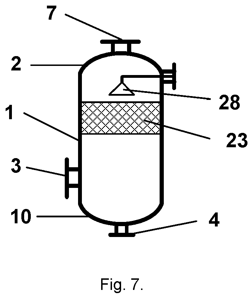

Fig. 7 stellt einen Tropfenabscheider mit Demister aus dem Stand der Technik dar. Ein mit Flüssigkeitstropfen beladener Gasstrom wird durch einen Einlass 3 am Mantel 1 dem Abscheider zugeführt. Bedingt durch die Schwerkraft bewegen sich die Flüssigkeitstropfen nach unten in Richtung eines Flüssigkeitsaustrittsstutzens 4, der an einer unteren Haube 10 angeordnet ist. Der aufgereinigte Gasstrom strömt durch einem Gasaustrittsstutzen 7 aus dem Abscheider heraus. Hierbei ist der Gasaustrittsstutzen an einer oberen Haube 2 angeordnet. Ein Demister 23 sorgt dafür, dass kleinere Flüssigkeitstropfen aufgefangen werden. Eine Sprüheinrichtung 28 benetzt den Demister, um eine schnelle Verstopfung, bedingt durch eine Polymerisation der Flüssigkeitstropfen, zu vermeiden.

### Beispiele:

### Vergleichsbeispiel 1 für nBA-Anlage:

Die Substanz n-Butylacrylat (nBA) kann großtechnisch durch eine säurekatalytische Veresterung von (Meth)Acrylsäure mit n-Butanol hergestellt werden. Ein entsprechendes Verfahren ist u.a. in dem Dokument DE 10063510 A1 (BASF AG) offenbart. Ein Verfahrensschritt in derartigen Verfahren ist die Abtrennung von Flüssigkeitstropfen aus einem Gasstrom, wobei die Flüssigkeitstropfen die abzutrennende Komponente Phenothiazin (PTZ) beinhalten. In Vergleichsbeispiel 1 gemäß dem Stand der Technik erfolgte die Abtrennung der Tröpfchen in einem kontinuierlich betriebenen Tropfenabscheider mit Demister 23 gemäß Fig. 7.

Der Tropfenabscheider hatte eine Höhe von 4 m und einen Durchmesser von 1,0 m, wobei zur Bestimmung der Höhe weder der Gasaustrittsstutzen 7 noch der Flüssigkeitsablauf 4 berücksichtigt wurden. Die Höhe des Demisters betrug 1470 mm. Als Demister wurde der von der Firma Munters Euroform GmbH (Philipsstraße. 8, 52068 Aachen) hergestellte Demister "Euroform DV270" eingesetzt.

Die Zulaufmenge betrug 10000 kg/h Produkt. Der Druck im Tropfenabscheider wurde auf 420 mbar über Normaldruck eingestellt. Die Temperatur betrug 118°C.

Die Zusammensetzung des über den Einlass 3 zugeführten Produktes in den Tropfenabscheider war:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,68 Gew.-% |
| Phenothiazin | 10 Gew.-ppm |
| 4-Methoxyphenol | 0 Gew.-ppm |
| Stickstoff | 0,04 Gew.-% |

Über die Sprüheinrichtung 28 wurden 400 kg/h Flüssigkeit mit einer Temperatur von 34°C auf die Oberseite des Demisters 23 gesprüht. Die Flüssigkeit hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,72 Gew.-% |
| Phenothiazin | < 1 Gew.-ppm |
| 4-Methoxyphenol | 15 Gew.-ppm |

Der aus dem Gasaustrittsstutzen 7 austretende Gasstrom von 9657 kg/h hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,68 Gew.-% |
| Phenothiazin | 2 Gew.-ppm |
| 4-Methoxyphenol | 1 Gew.-ppm |
| Stickstoff | 0,04 Gew.-% |

Die aus dem Flüssigkeitsaustrittsstutzen 4 ablaufende Flüssigkeit von 743 kg/h hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,71 Gew.-% |
| Phenothiazin | 110 Gew.-ppm |
| 4-Methoxyphenol | 1 Gew.-ppm |

Nach 120 Tagen Betriebszeit musste der Tropfenabscheider aufgrund von Verschmutzung gereinigt werden. Es wurde festgestellt, dass sich Polymere gebildet hatten, die den Demister 23 und die Innenwand des Tropfenabscheiders verschmutzten und dazu führten, dass die Gesamtanlage abgestellt werden musste.

### Beispiel 1 für nBA Anlage:

Für das erfindungsgemäße Beispiel 1 wurde der Tropfenabscheider des Vergleichsbeispiels 1 durch einen erfindungsgemäßen Zentrifugaltropfenabscheider gemäß Fig. 1 ersetzt.

Die Abmessungen des Zentrifugalabscheiders waren:
- Durchmesser 27: 1500 mm
- Höhe 26: 3278 mm
- Höhe der Düsenebene bezogen auf die untere Haube: 2039 mm
- Gaseintritt 3: DN500
- Gasaustritt 7: DN600
- Flüssigkeitsablauf 4: DN150
- Abstand zwischen Düse und Abtropfblech 8: 500 mm
- Abstand zwischen den äußeren Düsen und der Wand des Zentrifugaltropfenabscheiders: 7,5 mm
- Apexkegel 5: Durchmesser: 1050 mm, Höhe: 300 mm
- Abtropfblech 8: Durchmesser: 1000 mm, Höhe: 300 mm

Bei der Bestimmung der Höhe wurden weder der Gasaustrittsstutzen 7 noch der Flüssigkeitsablauf 4 berücksichtigt.

Im Zentrifugaltropfenabscheider waren sechs Vollkegeldüsen der Firma Lechler vom Typ 490.404.1Y.CA.00.0 nach Datenblatt "Lechler_Axial-Vollkegeldüsen_490_491.pdf" (https://www.lechler.com/fileadmin/media/kataloge/pdfs/industrie/katalog/DE/03 vollkegel/lechler vollkegelduesen baureihe 490 491.pdf) eingebaut. Der Innenwinkel der Hauptsprührichtung betrug 15° und war hierbei nach innen, also weggerichtet von dem Mantel 1, geneigt.

Durch die nach oben gerichteten Düsen erfolge eine kontinuierliche Zudosierung einer Stabilisator-Flüssigkeit. Der Gesamtvolumenstrom durch alle Düsen 9 betrug 200 bis 600 I/h.

In diesem Beispiel befand sich der Gasaustrittsstutzen 7 oberhalb des Mantels 1 auf der Außenfläche des Mantels 1, wodurch der Zentrifugaltropfenabscheider weniger Totzonen bereitstellte.

Die Zulaufmenge des mit Flüssigkeitströpfchen beladenen Gasstroms betrug 10000 kg/h. Der Druck im Zentrifugaltropfenabscheider wurde auf 420 mbar über Normaldruck eingestellt. Die Temperatur betrug 118°C.

Die Zusammensetzung des über den Einlass 3 zugeführten Produktes in den Zentrifugaltropfenabscheider war:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,68 Gew.-% |
| Phenothiazin | 10 Gew.-ppm |
| 4-Methoxyphenol | 0 Gew.-ppm |
| Stickstoff | 0,04 Gew.-% |

Über die Düsen 9 wurde ein Flüssigkeitsstrom der Stabilisator-Flüssigkeit von insgesamt 400 kg/h bei einer Temperatur von 34°C an die Wand des Zentrifugaltropfenabscheiders gesprüht.

Die Stabilisator-Flüssigkeit hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,72 Gew.-% |
| Phenothiazin | < 1 Gew.-ppm |
| 4-Methoxyphenol | 15 Gew.-ppm |

Der aus dem Gasaustrittsstutzen 7 austretende Gasstrom von 9657 kg/h hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,68 Gew.-% |
| Phenothiazin | < 1 Gew.-ppm |
| 4-Methoxyphenol | 1 Gew.-ppm |
| Stickstoff | 0,04 Gew.-% |

Die aus dem Flüssigkeitsaustrittsstutzen 4 ablaufende Flüssigkeit von 743 kg/h hatte folgende Zusammensetzung:

| | |
|---|---|
| n-Butanol | 0,04 Gew.-% |
| n-Butylacetat | 0,07 Gew.-% |
| n-Dibutylether | 0,10 Gew.-% |
| Isobutylacrylat | 0,07 Gew.-% |
| n-Butylacrylat | 99,71 Gew.-% |
| Phenothiazin | 130 Gew.-ppm |
| 4-Methoxyphenol | 1 Gew.-ppm |

In diesem Beispiel konnte eine Laufzeit von mehr als 180 Tagen ohne Abstellung durch Verschmutzung in dem Zentrifugaltropfenabscheider erreicht werden. Eine irreversible Belegung oder Ablagerungen des Zentrifugaltropfenabscheiders mit Polymer konnte auch nach 180 Tagen Betriebszeit nicht beobachtet werden.

Außerdem erreichte der Zentrifugaltropfenabscheider durch seine effiziente Abscheidung den Massenanteil von Phenothiazin auf unter 1 Gew.-ppm im Zielprodukt zu reduzieren. Das Zielprodukt ist hier der aus dem Zentrifugaltropfenabscheider austretende Gasstrom. In dem Tropfenabscheider mit Demister gemäß dem Vergleichsbeispiel 1 konnte Phenothiazin nur auf 2 Gew.-ppm reduziert werden.

### Vergleichsbeispiel 2 für 2-EHA Anlage:

Die Substanz 2-Ethylhexylacrylat (2-EHA) kann großtechnisch durch eine säurekatalytische Veresterung von (Meth)Acrylsäure mit 2-Ethylhexanol hergestellt werden. Ein entsprechendes Verfahren ist u.a. in dem Dokument DE 19604253 A1 (BASF AG) offenbart. Ein Verfahrensschritt in derartigen Verfahren ist die Abtrennung von Flüssigkeitstropfen aus einem Gasstrom, wobei die Flüssigkeitstropfen die abzutrennende Komponente Phenothiazin (PTZ) beinhalten

In Vergleichsbeispiel 2 gemäß dem Stand der Technik erfolgte die Abtrennung der Tröpfchen in einem kontinuierlich betriebenen Tropfenabscheider mit Demister 23 gemäß Fig. 7.

Der Tropfenabscheider hatte eine Höhe von 4 m und ein Durchmesser von 1,2 m. Die Höhe des Demisters 23 betrug 790 mm. Als Demister wurde der von der Firma Munters Euroform GmbH (Philipsstraße. 8, 52068 Aachen) hergestellte Demister "Euroform DV270" eingesetzt.

Die Zulaufmenge betrug 10000 kg/h Produkt. Der Druck im Tropfenabscheider wurde auf 140 mbar über Normaldruck und die Temperatur auf 148°C gesetzt.

Die Zusammensetzung des über den Einlass 3 zugeführten Produktes in den Tropfenabscheider war:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,71 Gew.-% |
| 3-(2-Ethylhexoxy)-Propionsäure-2-Ethylhexylester | 0,03 Gew.-% |
| Phenothiazin | 10 Gew.-ppm |
| 4-Methoxyphenol | 0 Gew.-ppm |
| Stickstoff | 0,02 Gew.-% |

Über die Sprüheinrichtung 28 wurde ein Flüssigkeitsstrom von 490 kg/h bei einer Temperatur von 34°C auf die Oberseite des Demisters 23 gesprüht. Die Flüssigkeit hatte folgende Zusammensetzung:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,73 Gew.-% |
| 3-(2-Ethylhexoxy)-Propionsäure-2-Ethylhexylester | 0,03 Gew.-% |
| Phenothiazin | < 1 Gew.-ppm |
| 4-Methoxyphenol | 15 Gew.-ppm |

Der aus dem Gasaustrittsstutzen 7 austretende Gasstrom von 9623 kg/h hatte folgende Zusammensetzung:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,72 Gew.-% |
| 3-(2-Ethylhexoxy)-Propionsäure-2-Ethylhexylester | 0,02 Gew.-% |
| Phenothiazin | 4 Gew.-ppm |
| 4-Methoxyphenol | 1 Gew.-ppm |
| Stickstoff | 0,02 Gew.-% |

Die aus dem Flüssigkeitsaustrittsstutzen 4 ablaufende Flüssigkeit von 867 kg/h hatte folgende Zusammensetzung:

| | |
|---|---|
| 2-Ethylhexanol | 0,03 Gew.-% |
| n-Ethylhexylacetat | 0,09 Gew.-% |
| n-Diethylhexylether | 0,01 Gew.-% |
| 2-Ethylhexylacrylat | 99,70 Gew.-% |
| 3-(2-Ethylhexoxy)-Propionsäure-2-Ethylhexylester | 0,16 Gew.-% |
| Phenothiazin | 70 Gew.-ppm |
| 4-Methoxyphenol | 10 Gew.-ppm |

Nach 80 Tagen Betriebszeit musste der Tropfenabscheider aufgrund von Verschmutzung gereinigt werden. Es wurde festgestellt, dass sich Polymere gebildet hatten, die den Demister 23 und die Innenwand des Tropfenabscheiders verschmutzten und dazu führten, dass die Gesamtanlage abgestellt werden musste.

### Beispiel 2 für 2-EHA Anlage:

Für das erfindungsgemäße Beispiel 2 wurde der Tropfenabscheider des Vergleichsbeispiels 2 durch einen erfindungsgemäßen Zentrifugaltropfenabscheider gemäß Fig. 1 ersetzt.

Die Abmessungen des Zentrifugalabscheiders waren:
- Durchmesser 27: 1800 mm
- Höhe 26: 3700 mm
- Höhe der Düsenebene bezogen auf die untere Haube: 2370 mm
- Gaseintritt 3: DN600
- Gasaustritt 7: DN600
- Flüssigkeitsablauf (4): DN150
- Abstand zwischen Düse und Abtropfblech 8: 500 mm
- Abstand zwischen den äußeren Düsen und der Wand des Zentrifugaltropfenabscheiders: 7,5 mm
- Apexkegel 5: Durchmesser: 1260 mm, Höhe: 360 mm
- Abtropfblech 8: Durchmesser: 1200 mm, Höhe: 400 mm

Bei der Bestimmung der Höhe wurden weder der Gasaustrittsstutzen 7 noch der Flüssigkeitsablauf 4 berücksichtigt.

Im Zentrifugaltropfenabscheider waren sechs Düsen vorhanden. Der Hersteller der Düsen ist die Firma Lechler. Hierbei wurde die Vollkegeldüse Typ 490.404.1Y.CA.00.0 nach Datenblatt "Lechler_Axial-Vollkegeldüsen_490_491.pdf" verwendet, welches unter dem Link: "https://www.lechler.com/fileadmin/media/kataloge/pdfs/industrie/katalog/DE/03_vollkegel/lechler_vollkegelduesen_baureihe_490_491.pdf" abrufbar ist. Der Innenwinkel der Hauptsprührichtung betrug 15° und war hierbei nach innen, also weggerichtet von dem Mantel 1, geneigt.

In diesem Beispiel befand sich der Gasaustrittsstutzen 7 oberhalb des Mantels 1 auf der Außenfläche des Mantels 1, wodurch der Zentrifugaltropfenabscheider weniger Totzonen bereitstellte.

Die Zulaufmenge des mit Flüssigkeitströpfchen beladenen Gasstroms betrug 10000 kg/h. Der Druck im Zentrifugaltropfenabscheider wurde auf 140 mbar über Normaldruck eingestellt. Die Temperatur betrug hierbei 148°C.

Die Zusammensetzung des über den Einlass 3 zugeführten Produktes in den Zentrifugaltropfenabscheider war:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,71 Gew.-% |
| 3-(2-Ethylhexoxy)-Propionsäure-2-Ethylhexylester | 0,03 Gew.-% |
| Phenothiazin | 10 Gew.-ppm |
| 4-Methoxyphenol | 0 Gew.-ppm |
| Stickstoff | 0,02 Gew.-% |

Über die Düsen 9 wurde ein Flüssigkeitsstrom der Stabilisator-Flüssigkeit von 490 kg/h bei einer Temperatur von 34°C an die Wand des Zentrifugaltropfenabscheiders gesprüht. Die Stabilisator-Flüssigkeit hatte folgende Zusammensetzung:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,73 Gew.-% |
| 3-(2-Ethylhexoxy)-Propionsäure-2-Ethylhexylester | 0,03 Gew.-% |
| Phenothiazin | < 1 Gew.-ppm |
| 4-Methoxyphenol | 15 Gew.-ppm |

Der aus dem Gasaustrittsstutzen 7 ausgetretene Gasstrom von 9623 kg/h hatte folgende Zusammensetzung:

| | |
|---|---|
| 2-Ethylhexanol | 0,08 Gew.-% |
| n-Ethylhexylacetat | 0,15 Gew.-% |
| n-Diethylhexylether | 0,01 Gew.-% |
| 2-Ethylhexylacrylat | 99,72 Gew.-% |
| 3-(2-Ethylhexoxy)-Propionsäure-2-Ethylhexylester | 0,02 Gew.-% |
| Phenothiazin | < 2 Gew.-ppm |
| 4-Methoxyphenol | 1 Gew.-ppm |
| Stickstoff | 0,02 Gew.-% |

Der aus dem Flüssigkeitsaustrittsstutzen 4 ablaufende Flüssigkeitsstrom von 867 kg/h hatte folgende Zusammensetzung:

| | |
|---|---|
| 2-Ethylhexanol | 0,03 Gew.-% |
| n-Ethylhexylacetat | 0,09 Gew.-% |
| n-Diethylhexylether | 0,01 Gew.-% |
| 2-Ethylhexylacrylat | 99,70 Gew.-% |
| 3-(2-Ethylhexoxy)-Propionsäure-2-Ethylhexylester | 0,16 Gew.-% |
| Phenothiazin | 100 Gew.-ppm |
| 4-Methoxyphenol | 10 Gew.-ppm |

In diesem Beispiel konnte eine Laufzeit von mehr als 150 Tagen ohne Abstellung durch Verschmutzung in dem Zentrifugaltropfenabscheider erreicht werden. Eine irreversible Belegung oder Ablagerungen des Zentrifugaltropfenabscheiders mit Polymer konnte auch nach 150 Tagen Betriebszeit nicht beobachtet werden.

Außerdem erreichte der Zentrifugaltropfenabscheider durch seine effiziente Abscheidung den Massenanteil von Phenothiazin auf unter 2 Gew.-ppm im Zielprodukt zu reduzieren. Das Zielprodukt ist hier der aus dem Zentrifugaltropfenabscheider austretende Gasstrom. In dem Tropfenabscheider mit Demister (Vergleichsbeispiel 2) konnte Phenothiazin nur auf 4 Gew-ppm reduziert werden.

## Patentansprüche

1. Zentrifugaltropfenabscheider zum Abscheiden von Flüssigkeitstropfen aus einem Gasstrom, der
einen im Querschnitt kreisrunden Mantel (1) mit einer vertikalen Längsachse (11),
eine den Mantel (1) nach oben begrenzende obere Haube (2) mit einem Gasaustrittsstutzen (7) für den im Zentrifugaltropfenabscheider gereinigten Gasstrom,
ein unterhalb des Gasaustrittsstutzens (7) angeordnetes Abtropfblech (8),
eine den Mantel (1) nach unten begrenzende untere Haube (10) mit einem Flüssigkeitsaustrittsstutzen (4) zur Abführung der abgeschiedenen Flüssigkeitstropfen und einen tangential in den Mantel (1) mündenden Einlass (3) zum Zuführen des Gasstroms umfasst,
**dadurch gekennzeichnet, dass**
mindestens zwei Düsen (9) zur Zuführung einer Stabilisator-Flüssigkeit in den Innenraum des Zentrifugaltropfenabscheiders vorhanden sind,
sich der Düsenauslass (15) der jeweiligen Düse (9) oberhalb des tangentialen Einlass (3) und unterhalb des Abtropfblechs (8) im Zentrifugaltropfenabscheider befindet,
die Hauptsprührichtung (12) für jede einzelne Düse (9) in einem Innenwinkel (16) im Bereich von 0 bis 60° zur vertikalen Längsachse (11) nach oben gerichtet ist und dadurch alle Wände im Innenraum des Zentrifugaltropfenabscheiders vollständig benetzbar sind.

2. Zentrifugaltropfenabscheider nach Anspruch 1, **dadurch gekennzeichnet, dass** das Längenverhältnis zwischen dem axialen Abstand des Düsenauslass (15) der obersten Düse zum Abtropfblech (8) und der Höhe (26) des Zentrifugaltropfenabscheiders sich im Bereich von 0,03 bis 0,15 befindet.

3. Zentrifugaltropfenabscheider nach einem der Ansprüche 1 oder 2, **dadurch gekennzeichnet, dass** das Längenverhältnis zwischen dem radialen Abstand des Düsenauslass (15) zur Mantelinnenfläche und der Höhe (26) des Zentrifugaltropfenabscheiders nicht mehr als 0,06 beträgt.

4. Zentrifugaltropfenabscheider nach einem der Ansprüche 1 bis 3, **dadurch gekennzeichnet, dass** sich der Innenwinkel (16) der jeweiligen Düse (9) im Bereich von 0 bis 50°, bevorzugt im Bereich von 0 bis 40° und besonders bevorzugt im Bereich von 0 bis 30° befindet.

5. Zentrifugaltropfenabscheider nach einem der Ansprüche 1 bis 4, **dadurch gekennzeichnet, dass** ein offener Apexkegel (5) zur Stabilisierung des Gasstromes auf Wirbelbrechern (6) beim Flüssigkeitsaustrittsstutzen (4) montiert ist.

6. Zentrifugaltropfenabscheider nach einem der Ansprüche 1 bis 5, **dadurch gekennzeichnet, dass** sich der Gasaustrittsstutzen (7) im Zentrifugaltropfenabscheider zumindest teilweise oberhalb des Mantels (1) auf der Seite der Außenfläche des Mantels (1) befindet.

7. Zentrifugaltropfenabscheider nach einem der Ansprüche 1 bis 6, **dadurch gekennzeichnet, dass** die untere Hälfte des Zentrifugaltropfenabscheiders auf der Mantelaußenseite eine Temperiereinrichtung, insbesondere eine Heizung, aufweist.

8. Zentrifugaltropfenabscheider nach einem der Ansprüche 1 bis 7, **dadurch gekennzeichnet, dass** die Düsen (9) durch mindestens ein Steckelement (17) im Zentrifugaltropfenabscheider fixiert sind, wobei das jeweilige Steckelement (17) eine Lanze (18) und mindestens ein Halteelement (19) für mindestens eine Düse (9) aufweist.

9. Zentrifugaltropfenabscheider nach einem der Ansprüche 1 bis 7, **dadurch gekennzeichnet, dass** jeweils mindestens eine Düse (9) durch ein Öffnungselement (20) im Mantel (1), vorzugsweise durch einen Stutzen, verläuft, wobei das Öffnungselement durch ein öffenbares Halteelement (19), vorzugsweise ein Flansch, abgedichtet ist.

10. Verfahren zum Abscheiden von Flüssigkeitstropfen aus einem Gasstrom in einem Zentrifugaltropfenabscheider, der einen im Querschnitt kreisrunden Mantel (1) mit einer vertikalen Längsachse (11), eine den Mantel (1) nach oben begrenzende obere Haube (2) mit einem Gasaustrittsstutzen (7) für den im Zentrifugaltropfenabscheider gereinigten Gasstrom, ein unterhalb des Gasaustrittstutzens (7) angeordnetes Abtropfblech (8), eine den Mantel (1) nach unten begrenzende untere Haube (10) mit einem Flüssigkeitsaustrittsstutzen (4) zur Abführung der abgeschiedenen Flüssigkeitstropfen und einen tangential in den Mantel (1) mündenden Einlass (3) umfasst, durch den der Gasstrom zugeführt wird, **dadurch gekennzeichnet, dass**
eine Stabilisator-Flüssigkeit durch mindestens zwei Düsen (9) in den Innenraum des Zentrifugaltropfenabscheiders zugeführt wird, sich der Düsenauslass (15) der jeweiligen Düse (9) oberhalb des tangentialen Einlass (3) und unterhalb des Abtropfblechs (8) im Zentrifugaltropfenabscheider befindet, die Hauptsprührichtung (12) der jeweiligen Düse (9) mit einem Innenwinkel (16) im Bereich von 0 bis 60° zur vertikalen Längsachse (11) nach oben gerichtet ist und dadurch alle Wände im Innenraum des Zentrifugaltropfenabscheiders vollständig mit der Stabilisator-Flüssigkeit benetzt werden.

11. Verfahren nach Anspruch 10, **dadurch gekennzeichnet, dass** die Stabilisator-Flüssigkeit dem Zentrifugaltropfenabscheider kontinuierlich zugeführt wird.

12. Verfahren nach einem der Ansprüche 10 oder 11, **dadurch gekennzeichnet, dass** die Stabilisator-Flüssigkeit 4-Methoxyphenol (MeHQ) enthält.

13. Verfahren nach einem der Ansprüche 10 bis 12, **dadurch gekennzeichnet, dass** der dem Zentrifugaltropfenabscheider zugeführte Gasstrom Tropfen von Substanzen enthält, die aufgrund ihrer chemischen Eigenschaften zur Polymerisation an Wänden des Zentrifugaltropfenabscheiders neigen.

14. Verfahren nach Anspruch 13, **dadurch gekennzeichnet, dass** der dem Zentrifugaltropfenabscheider zugeführte Gasstrom Acrylate, die durch eine säurekatalytische Veresterung von (Meth)Acrylsäure mit C4- bis C10-Alkoholen entstanden sind, insbesondere n-Butylacrylat (nBA) oder 2-Ethylhexylacrylat (2-EHA), enthält.

## Claims

1. A centrifugal droplet separator for separating liquid droplets out of a gas stream, comprising
a shell (1) having a circular cross section and a vertical longitudinal axis (11), an upper hood (2) that bounds the shell (1) at the top and has a gas exit port (7) for the gas stream cleaned in the centrifugal droplet separator, a drip plate (8) disposed beneath the gas exit port (7), a lower hood (10) that bounds the shell (1) at the bottom and has a liquid exit port (4) for removal of the deposited liquid droplets
and an inlet (3) that opens tangentially into the shell (1) for supply of the gas stream,
wherein
there are at least two nozzles (9) for feeding a stabilizer liquid into the interior of the centrifugal droplet separator,
the nozzle outlet (15) of the respective nozzle (9) is above the tangential inlet (3) and below the drip plate (8) in the centrifugal droplet separator,
the main spraying direction (12) for each individual nozzle (9) is directed upward at an internal angle (16) in the range from 0 to 60° relative to the vertical longitudinal axis (11) and hence all walls in the interior of the centrifugal droplet separator are fully wettable.

2. The centrifugal droplet separator according to claim 1, wherein the length ratio between the axial distance of the nozzle outlet (15) of the uppermost nozzle from the drip plate (8) and the height (26) of the centrifugal droplet separator is in the range from 0.03 to 0.15.

3. The centrifugal droplet separator according to either of claims 1 and 2, wherein the length ratio between the radial distance of the nozzle outlet (15) from the inner shell surface and the height (26) of the centrifugal droplet separator is not more than 0.06.

4. The centrifugal droplet separator according to any of claims 1 to 3, wherein the internal angle (16) of the respective nozzle (9) is in the range from 0 to 50°, preferably in the range from 0 to 40° and more preferably in the range from 0 to 30°.

5. The centrifugal droplet separator according to any of claims 1 to 4, wherein an open apex cone (5) for stabilization of the gas stream is mounted on baffles (6) in the liquid exit port (4).

6. The centrifugal droplet separator according to any of claims 1 to 5, wherein the gas exit port (7) in the centrifugal droplet separator is at least partly above the shell (1) on the side of the outer face of the shell (1).

7. The centrifugal droplet separator according to any of claims 1 to 6, wherein the lower half of the centrifugal droplet separator has a temperature control unit, especially a heater, on the outside of the shell.

8. The centrifugal droplet separator according to any of claims 1 to 7, wherein the nozzles (9) are fixed in the centrifugal droplet separator by at least one insert element (17), where the respective insert element (17) has a lance (18) and at least one holding element (19) for at least one nozzle (9).

9. The centrifugal droplet separator according to any of claims 1 to 7, wherein at least one nozzle (9) in each case runs through an opening element (20) in the shell (1), preferably through a port, where the opening element is sealed by an openable holding element (19), preferably a flange.

10. A method of separating liquid droplets out of a gas stream in a centrifugal droplet separator comprising a shell (1) having a circular cross section and a vertical longitudinal axis (11), an upper hood (2) that bounds the shell (1) at the top and has a gas exit port (7) for the gas stream cleaned in the centrifugal droplet separator, a drip plate (8) disposed beneath the gas exit port (7), a lower hood (10) that bounds the shell (1) at the bottom and has a liquid exit port (4) for removal of the deposited liquid droplets, and an inlet (3) that opens tangentially into the shell (1), through which the gas stream is fed in, wherein
a stabilizer liquid is fed into the interior of the centrifugal droplet separator through at least two nozzles (9), the nozzle outlet (15) of the respective nozzle (9) is above the tangential inlet (3) and below the drip plate (8) in the centrifugal droplet separator, the main spraying direction (12) of the respective nozzle (9) is directed upward at an internal angle (16) in the range from 0 to 60° relative to the vertical longitudinal axis (11), and hence all walls in the interior of the centrifugal droplet separator are fully wetted by the stabilizer liquid.

11. The method according to claim 10, wherein the stabilizer liquid is fed continuously to the centrifugal droplet separator.

12. The method according to either of claims 10 and 11, wherein the stabilizer liquid comprises 4-methoxyphenol (MeHQ).

13. The method according to any of claims 10 to 12, wherein the gas stream fed to the centrifugal droplet separator comprises droplets of substances which, because of their chemical properties, have a tendency to polymerize on walls of the centrifugal droplet separator.

14. The method according to claim 13, wherein the gas stream fed to the centrifugal droplet separator comprises acrylates that have formed as a result of an acid-catalyzed esterification of (meth)acrylic acid with C4 to C10 alcohols, especially n-butyl acrylate (nBA) or 2-ethylhexyl acrylate (2-EHA).

## Revendications

1. Séparateur centrifuge de gouttes pour séparer des gouttes de liquide d'un courant de gaz, qui comprend
une enveloppe (1) de section transversale circulaire avec un axe longitudinal vertical (11), un capot supérieur (2) délimitant l'enveloppe (1) vers le haut avec une tubulure de sortie de gaz (7) pour le courant de gaz épuré dans le séparateur centrifuge de gouttes,
une plaque d'égouttage (8) agencée en dessous de la tubulure de sortie de gaz (7),
un capot inférieur (10) délimitant l'enveloppe (1) vers le bas, avec une tubulure de sortie de liquide (4) pour évacuer les gouttes de liquide séparées
et une entrée (3) débouchant tangentiellement dans l'enveloppe (1) pour amener le courant de gaz,
**caractérisé en ce que**
au moins deux buses (9) sont présentes pour amener un liquide stabilisateur dans l'espace intérieur du séparateur centrifuge de gouttes,
la sortie de buse (15) de la buse respective (9) se trouve au-dessus de l'entrée tangentielle (3) et au-dessous de la plaque d'égouttage (8) dans le séparateur centrifuge de gouttes,
la direction de pulvérisation principale (12) pour chaque buse individuelle (9) est dirigée vers le haut selon un angle intérieur (16) dans la plage de 0 à 60° par rapport à l'axe longitudinal vertical (11), et ainsi toutes les parois dans l'espace intérieur du séparateur centrifuge de gouttes sont complètement mouillables.

2. Séparateur centrifuge de gouttes selon la revendication 1, **caractérisé en ce que** le rapport de longueur entre la distance axiale de la sortie de buse (15) de la buse la plus haute à la plaque d'égouttage (8) et la hauteur (26) du séparateur centrifuge de gouttes se trouve dans la plage de 0,03 à 0,15.

3. Séparateur centrifuge de gouttes selon l'une quelconque des revendications 1 ou 2, **caractérisé en ce que** le rapport de longueur entre la distance radiale de la sortie de buse (15) à la surface intérieure d'enveloppe et la hauteur (26) du séparateur centrifuge de gouttes n'est pas supérieur à 0,06.

4. Séparateur centrifuge de gouttes selon l'une quelconque des revendications 1 à 3, **caractérisé en ce que** l'angle intérieur (16) de chaque buse (9) se trouve dans la plage de 0 à 50°, de préférence dans la plage de 0 à 40° et de manière particulièrement préférée dans la plage de 0 à 30°.

5. Séparateur centrifuge de gouttes selon l'une quelconque des revendications 1 à 4, **caractérisé en ce qu'**un cône à apex ouvert (5) est monté sur des briseurs de tourbillon (6) au niveau de la tubulure de sortie de liquide (4) pour stabiliser le courant de gaz.

6. Séparateur centrifuge de gouttes selon l'une quelconque des revendications 1 à 5, **caractérisé en ce que** la tubulure de sortie de gaz (7) se trouve dans le séparateur centrifuge de gouttes au moins partiellement au-dessus de l'enveloppe (1) du côté de la surface extérieure de l'enveloppe (1).

7. Séparateur centrifuge de gouttes selon l'une quelconque des revendications 1 à 6, **caractérisé en ce que** la moitié inférieure du séparateur centrifuge de gouttes présente un dispositif de thermorégulation, notamment un chauffage, sur le côté extérieur de l'enveloppe.

8. Séparateur centrifuge de gouttes selon l'une quelconque des revendications 1 à 7, **caractérisé en ce que** les buses (9) sont fixées dans le séparateur centrifuge de gouttes par au moins un élément enfichable (17), l'élément enfichable (17) respectif présentant une lance (18) et au moins un élément de retenue (19) pour au moins une buse (9).

9. Séparateur centrifuge de gouttes selon l'une quelconque des revendications 1 à 7, **caractérisé en ce que** chaque fois au moins une buse (9) passe par un élément d'ouverture (20) dans l'enveloppe (1), de préférence par une tubulure, l'élément d'ouverture étant étanchéifié par un élément de retenue ouvrable (19), de préférence une bride.

10. Procédé de séparation de gouttes de liquide d'un courant de gaz dans un séparateur centrifuge de gouttes, qui comprend une enveloppe (1) de section transversale circulaire avec un axe longitudinal vertical (11), un capot supérieur (2) délimitant l'enveloppe (1) vers le haut avec une tubulure de sortie de gaz (7) pour le courant de gaz épuré dans le séparateur centrifuge de gouttes, une plaque d'égouttage (8) agencée au-dessous de la tubulure de sortie de gaz (7), un capot inférieur (10) délimitant l'enveloppe (1) vers le bas avec une tubulure de sortie de liquide (4) pour l'évacuation des gouttes de liquide séparées, et une entrée (3) qui débouche tangentiellement dans l'enveloppe (1) et par laquelle le courant de gaz est amené, **caractérisé en ce que**
un liquide stabilisateur est amené par au moins deux buses (9) dans l'espace intérieur du séparateur de gouttes centrifuge, la sortie de buse (15) de la buse respective (9) se trouve au-dessus de l'entrée tangentielle (3) et au-dessous de la plaque d'égouttage (8) dans le séparateur centrifuge de gouttes, la direction de pulvérisation principale (12) de la buse respective (9) est dirigée vers le haut avec un angle intérieur (16) dans la plage de 0 à 60° par rapport à l'axe longitudinal vertical (11) et ainsi toutes les parois dans l'espace intérieur du séparateur centrifuge de gouttes sont complètement mouillées par le liquide stabilisateur.

11. Procédé selon la revendication 10, **caractérisé en ce que** le liquide stabilisateur est amené en continu au séparateur centrifuge de gouttes.

12. Procédé selon l'une quelconque des revendications 10 ou 11, **caractérisé en ce que** le liquide stabilisateur contient du 4-méthoxyphénol (MeHQ).

13. Procédé selon l'une quelconque des revendications 10 à 12, **caractérisé en ce que** le courant de gaz amené au séparateur centrifuge de gouttes contient des gouttes de substances qui, en raison de leurs propriétés chimiques, ont tendance à polymériser sur les parois du séparateur centrifuge de gouttes.

14. Procédé selon la revendication 13, **caractérisé en ce que** le courant de gaz amené au séparateur centrifuge de gouttes contient des acrylates qui ont été formés par une estérification catalytique acide d'acide (méth)acrylique avec des alcools en C4 à C10, notamment de l'acrylate de n-butyle (nBA) ou de l'acrylate de 2-éthylhexyle (2-EHA).
